# EUROPEAN PATENT SPECIFICATION

(11) **EP 3 950 269 B1**
(45) Date of publication and mention of the grant of the patent: **20.09.2023**
(21) Application number: 21186849.2
(22) Date of filing: 21.07.2021
(51) Int. Cl.: B29C 51/26

(54) **THERMOFORMING APPARATUS**
THERMOFORMUNGSVORRICHTUNG
APPAREIL DE THERMOFORMAGE

(30) Priority: 03.08.2020 IT 202000019057
(43) Date of publication of application: 09.02.2022
(73) Proprietor: C.M.S. S.p.A., 24019 Zogno (BG) (IT)
(72) Inventor: GAIAZZI, Fabio, 21040 Sumirago (VA) (IT); ROTA, Angelo, 24030 Almenno San Bartolomeo (BG) (IT); CORMONS, Michele, 24046 Osio Sotto (BG) (IT)
(74) Representative: Luppi Intellectual Property S.r.l.

(56) References cited:
- US-A- 4 097 035
- US-A- 4 938 678

## Description

### Background of the invention

The invention concerns a thermoforming apparatus.

Specifically, but not exclusively, the invention relates to a thermoforming apparatus configured to perform thermoforming operations on objects, for example on objects in the form of a slab or film, in particular objects made of plastic material, said thermoforming apparatus being provided with an object pick-up device.

A thermoforming apparatus configured to perform thermoforming operations on slab-shaped objects made of plastic material is known. The thermoforming apparatus includes a work area in which plastic slabs or film are hot pressed/drawn, under pressure or under vacuum.

The thermoforming apparatus further comprises an object loading area, i.e. an area where objects in the form of slabs or films are loaded, and an unloading area for the processed objects, i.e. an area where the same objects are unloaded after they have been subjected to the aforementioned heat processes.

In the loading area, the slabs are arranged one above the other to form a pile of objects. In the loading area, the apparatus is equipped with an object pick-up device arranged to pick up one object at a time from the pile of objects. This removed object is intended to be moved between the loading area and the work area.

The handling device comprises a pick-up frame arranged to pick up one object at a time from the pile of objects.

The frame is provided with withdrawal means, for example with suction cups. Each suction cup is able to adhere to the surface of the object/slab positioned on top of the pile of objects, taking advantage of the depression generated inside it. The pick-up frame is vertically movable towards and/or away from the pile of objects. This allows, once the suction cups are adhered to the surface of the object, to take it from the pile of the remaining objects. The frame comprises a plurality of support bars connected together so that the support frame assumes a square or rectangular shape in plan. The suction cups are mounted on a pair of support bars of the pick-up frame, the bars of the pair being mutually opposite and substantially parallel to each other. On each bar the suction cups are mounted in succession along the main extension direction of the bar. The frame includes fixed bars arranged transversely to the bars with suction cups. The bars equipped with suction cups are mounted slidingly between the fixed bars.

An operator is able to adjust a relative position of the movable bars by moving both movable bars on the fixed bars to bring them closer or further away. In other words, the operator is able to vary a distance between two succession of suction cups based on the size of the object or slab to be picked up. Each movable bar is connected to the fixed bars by means of connection, for example screws or bolts. Said connecting means can be adjusted to connect the movable bars to the fixed bars in a fixed manner; if necessary, these connection means can also be adjusted to allow the movable bar to move with respect to the fixed bars. **Patent publication** US 4097035 A **discloses a thermoforming apparatus as in the preamble of claim 1.**

These thermoforming apparatuses of the known art can be improved in various aspects. Before an operator can move a bar equipped with suction cups, the operator must first unscrew the connecting screws and/or bolts from their respective seats. In addition, after adjusting the position of the bar, the operator must screw the connecting screws and/or bolts back into their respective seats. This operation must also be repeated for the other movable bar. This greatly increases the inactivity time of the thermoforming apparatus, especially when two piles of objects to be removed and thermoformed have different plate sizes.

The position adjustment of the movable bars can be inaccurate, especially if the bars are to be adjusted symmetrically with respect to an axis of symmetry of the frame. Finally, the manual adjustment of all the movable bars increases the working risk of the operator in charge of the adjustment, as the latter must necessarily enter the loading area and must remain there for as long as necessary to adjust the bars.

### Summary of the invention

An object of the invention is to improve a thermoforming apparatus arranged to thermoform objects in the form of a slab or film.

An object of the invention is in particular to improve a pick-up device arranged to pick up stacked objects in a loading area of this thermoforming apparatus.

An object of the invention is to adjust a position of support elements of the pick-up device, on which means for holding an object are provided, quickly and safely.

An object of the invention is to reduce the working risk of an operator assigned to adjusting the holding means.

An advantage is providing a forming apparatus, in particular a pick-up device provided in a loading area of the thermoforming apparatus, constructively compact and simple to make.

An advantage is to reduce the inoperative times of the thermoforming apparatus.

An advantage is to easily and precisely adjust a position of supporting elements of holding means of the pick-up device.

An advantage is to limit the number of accesses and the residence time of an operator in the pick-up area of the thermoforming apparatus.

These objects and advantages and others are all achieved by the thermoforming apparatus according to one or more of the claims reported below.

In one example, a thermoforming apparatus arranged to perform thermoforming operations on objects in the form of a slab or film comprises at least one loading area in which the objects are positioned on top of each other so as to form a pile of objects. In the loading area there is a pick-up device arranged to pick up one object at a time from the pile of objects. The pick-up device comprises a support frame which can move towards and/or away from the pile of objects, and support elements mounted slidably on the support frame; the pick-up device is also provided with a connecting member arranged to connect the support elements to each other. The support elements are positioned on the connecting member so that a displacement of a support element in a displacement direction corresponds to a displacement of at least one further support element in a further displacement direction substantially parallel and opposite to the displacement direction to vary a distance between these support elements on the basis of a size of the object to be picked up.

In an example, a method is described for picking up at least one object from the loading area of the thermoforming apparatus.

### Brief description of the drawings

The invention can be better understood and implemented with reference to the attached drawings which illustrate a non-limiting example of implementation, in which:
Figure 1 is a perspective view of a thermoforming apparatus to perform thermoforming operations on objects in the form of a slab or film according to the invention;
Figure 2 is a perspective view of a pick-up device provided in a loading area of the forming apparatus of Figure 1;
Figure 3 is a front view of the pick-up device of Figure 2;
Figures 4 and 5 are perspective views showing some steps of moving the support elements with which the pick-up device of Figure 3 is provided;
Figure 6 is an enlargement of a detail of Figure 4;
Figure 6A is a detail of Figure 6;
Figure 7 is a plan view of Figure 4;
Figure 8 is a plan view of Figure 5;
Figure 9 is a sectional view of Figure 7 taken along the section plane IX-IX.

### Detailed description

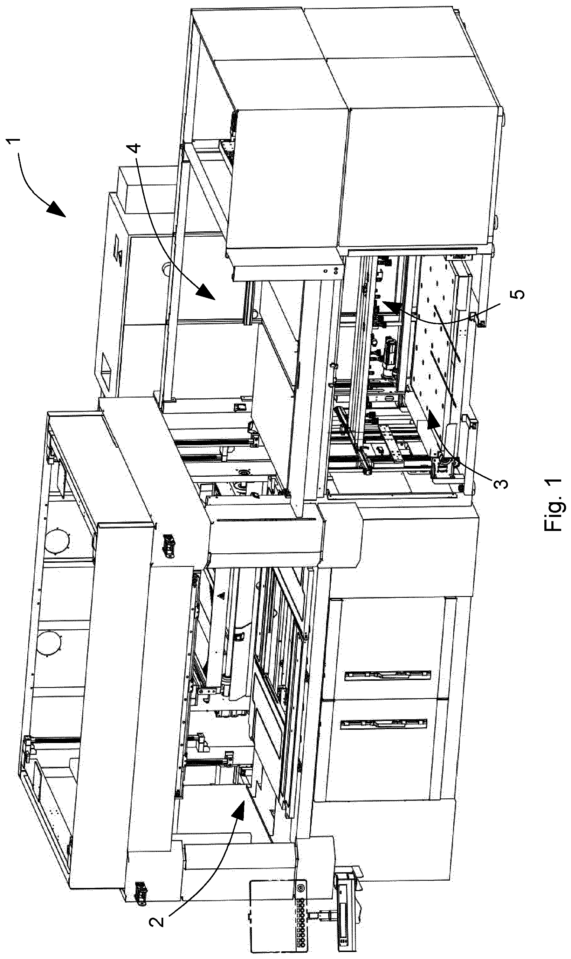

With reference to Figure 1, the numerical reference 1 indicates as a whole a thermoforming apparatus configured to perform thermoforming operations on objects O, for example objects in the form of a slab or film.

The objects in the form of a slab or film may be made of plastic or other similar materials. The objects in the form of slabs may have a first dimension (for example a width) between 2cm and 230cm, a second dimension (for example a length) between 2cm and 4000cm and a third dimension (for example a thickness) between 2mm and 200mm.

The thermoforming apparatus 1 comprises a processing area 2 in which an object O, that is a slab or a plastic film is molded/deep drawn under heat, under pressure or under vacuum.

The thermoforming apparatus 1 also comprises a loading area 3 in which the objects in the form of slabs or films are loaded. In the loading area, the slabs are arranged one above the other to form a pile of objects O.

The loading area 3 is delimited by a plurality of walls arranged in such a way as to define a chamber in which the pile of objects O is temporarily stored. For example in Figure 1 the chamber may have a cubic or parallelepiped shape, or other equivalent forms. The chamber may also have an opening to allow the insertion of the pile of objects O inside it. Cover elements are provided, not illustrated, arranged to close the opening of the room, for example a door, a window, a sash and so on.

In the loading area 3 the objects may be transported manually by an operator, with the aid of displacement means, for example trans-pallets, forklifts, lift trucks, or other similar means.

The thermoforming apparatus 1 also comprises an unloading area 4 in which the molded or drawn objects are unloaded, or stored before being subjected to any further processing.

In the loading area 3 the thermoforming apparatus 1 is provided with an object pick-up device 5 arranged to pick up one object at a time from the pile of objects, this object being subsequently intended to be moved from the loading area 3 towards the processing area 2.

The handling devices arranged to perform the last handling operation described are of a known type and will not be described in detail as they are not part of the object of the present invention.

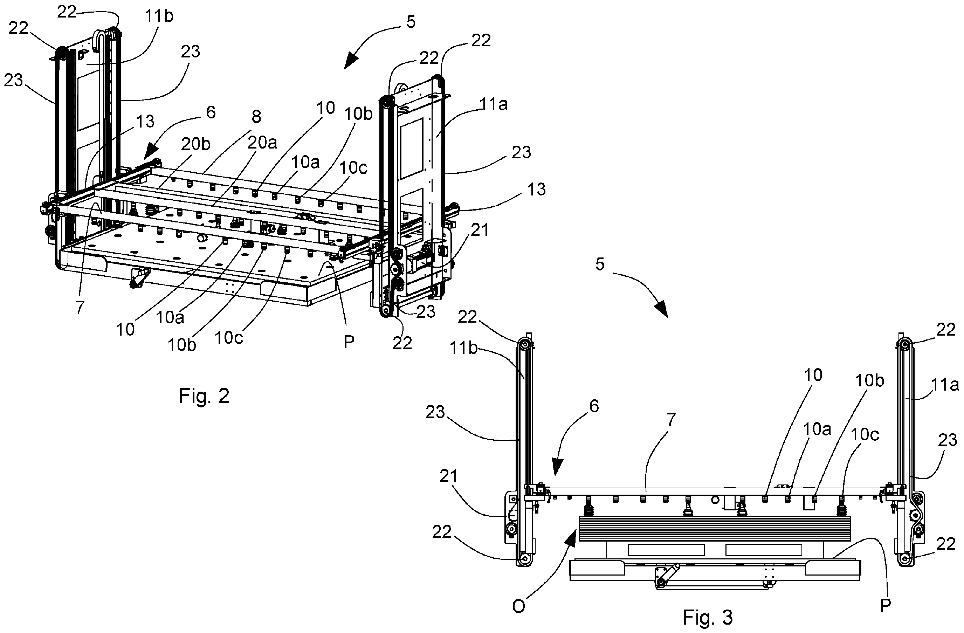

The pick-up device 5 is shown as a whole in Figures 2 and 3.

The pick-up device 5 comprises a pair of uprights 11a, 11b positioned inside the chamber of the loading area 3; the two uprights extend vertically inside the chamber and are horizontally spaced from each other. The term "horizontally" means a direction oriented substantially parallel to a support plane on which the forming apparatus 1 rests. Consequently, the term "vertically" means a direction oriented transversely to this support plane, in particular perpendicular to it.

The pick-up device 5 comprises a support frame 6 movable towards and/or away from the pile of objects O. In particular the support frame 6 is movable vertically towards and/or away from the pile of objects O.

In the version described, the support frame 6 may be mounted slidingly on the uprights 11a, 11b to move in a transverse direction to the support plane of the thermoforming apparatus 1 in order to approach and/or move away from the objects. The support frame 6 is mounted on the uprights 11a, 11b so as to be operationally positioned above the pile of objects O, as shown in Figure 3.

The support frame 6 may comprise support means 24 arranged to connect the frame 6 to the uprights 11a, 11b and to support the frame 6 in movement.

On one of the uprights 11a, 11b, or on both uprights, motor means 21 is provided which may be actuated to move the support frame 6 along the uprights.

On each upright 11a, 11b there are also provided motion transmission means 22, 23 connected to the support frame 6 and arranged to transmit to the support frame 6 the motion imparted by the motor means 21.

The transmission means may comprise a plurality of pulleys 22 mounted respectively on upper end portions and lower end portions of each upright 11a, 11b. The pulleys 22 are mounted in pairs and at the same vertical height on opposite faces of the uprights 11a, 11b, the vertical height being measured in the direction perpendicular to the support plane of the thermoforming apparatus 1.

Furthermore, a pair of pulleys 22 mounted at the same vertical height on an end portion (lower or upper) of the upright 11b corresponds to a pair of pulleys 22 mounted on an end portion (lower or upper) of the upright 11a. At least one of the pulleys 22 is a driving pulley, i.e. connected directly or indirectly to the driving means, this connection being made in a manner known to a skilled person, and therefore not described.

The transmission means may comprise transmission belts 23 arranged to connect each of the pulleys 22 mounted in the lower portion of one of the uprights 11a or 11b, with a respective pulley 22 mounted on the upper portion of the uprights 11a or 11b.

The pick-up device 5 also comprises support elements 7, 8 mounted slidably on the support frame 6, as will be explained later.

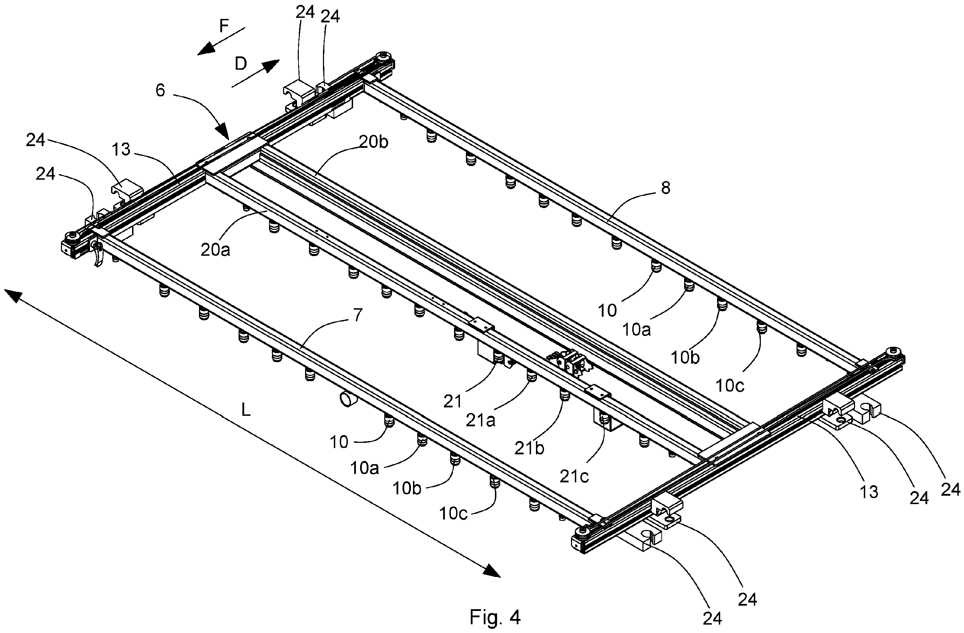

In the embodiment shown in the attached figures, the support elements 7 and 8 may be support bars, having a prevailing dimension with respect to the other dimensions and extending mainly in a direction parallel to a main direction L, as shown in Figure 4.

In the embodiment shown in the attached figures, two support elements 7, 8 are provided; however, the number of supporting elements may vary, in particular be increased depending on the circumstances.

The supporting frame 6 comprises at least one elongated body 13 extending in a direction parallel to a movement direction D. The supporting elements 7, 8 are mounted slidably on the elongated body 13.

In particular, the support frame 6 comprises a pair of elongated bodies 13, spaced apart along the main direction L to allow the sliding assembly of the support elements 7, 8.

The pick-up device 5 is also provided with a connecting member 9 arranged to connect the support elements 7, 8 to each other.

The connecting member 9 is removably mounted on the support frame 6, in particular on one face of the elongated body 13. The connecting member may also be mounted on the other elongated body 13.

Hereinafter, for simplicity, reference will be made only to one of the two elongated bodies 13; however what has been described may also be extended to the other elongated body 13.

The connecting member 9 may extend in a direction substantially parallel to the movement direction D on the elongated body 13.

The support elements 7, 8 are positioned on the connecting member 9 so that a displacement of a support element 7 in the movement direction D corresponds to a displacement of at least one further support element 8 in a further movement direction F substantially parallel and opposite to the movement direction D.

For example, in an embodiment not shown the connecting member may comprise a mechanism provided with gears and racks with each support element being positioned on a respective rack. In addition, the racks are connected to each other so that by moving one of the two support elements, the other also moves. In another embodiment not shown, the connecting member may comprise a mechanism provided with connecting rods, connected to each other and to each support element so that, by moving one of the two support elements, the other also moves.

In the embodiment shown in the figures, on the other hand the connecting member 9 is closed in a ring and is arranged to connect the support elements 7, 8 to each other.

In general, the positioning of the support elements 7, 8 on the connecting member 9 is furthermore such that a displacement of a support element 7 in the further movement direction F corresponds to a displacement of the at least one further support element 8 in the movement direction D.

The movement direction D is oriented transversely to the main direction L in a horizontal plane, i.e. a plane parallel to the support plane of the thermoforming apparatus 1. In particular, the movement direction D, and therefore the further movement direction F, is perpendicular in the plane to the main direction L. In other words, thanks to the connection member 9 and the positioning of the support element 7 and of the support element 8 on the connection member 9 in the manner described below, a displacement in one direction of one of the support elements, will correspond to a displacement of the other support element in the parallel and opposite direction.

This allows to vary a distance between the support elements 7, 8 on the basis of a dimension of the object to be picked up from the pile of objects O, for example a length of the object to be picked up, measured along a direction parallel to the movement direction D.

The support element 7 and the further support element 8 are positioned on the connection member 9 so that a displacement value of the support element 7 in the movement direction D corresponds to the same displacement value of the further support element 8 in the further movement direction F. This means that, regardless of whether the support element 7 and the further support element 8 are positioned on the connecting member 9 symmetrically, with respect to a central portion of the elongated body 13, if one of the elements moves by a predetermined amount in the movement direction D or in the further movement direction F, the other support element moves by the same predetermined amount in the opposite direction.

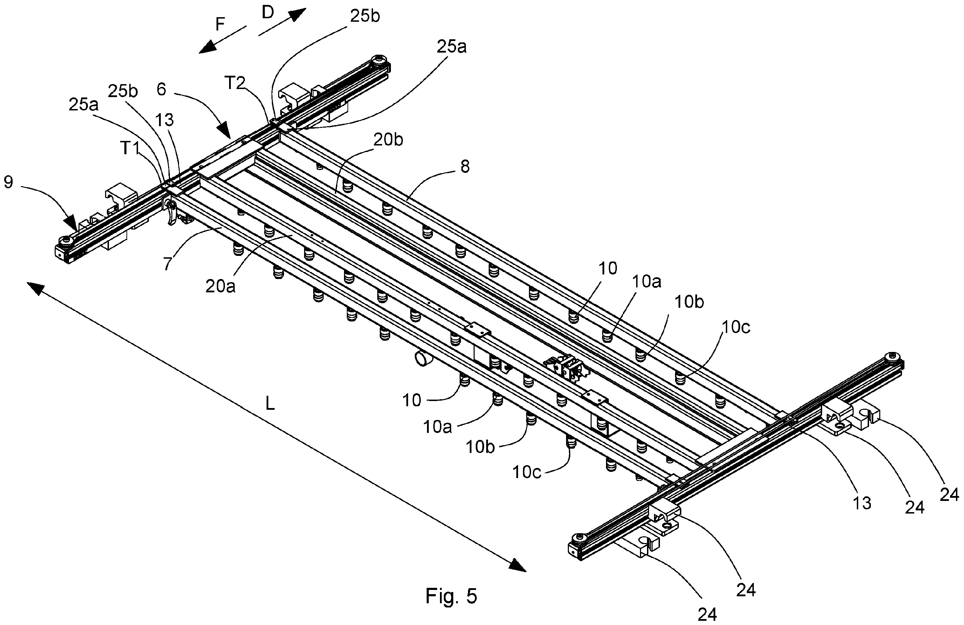

However in particular, the support element 7 and the further support element 8 are positioned on the connecting member 9 symmetrically with respect to the central portion of the elongated body 13; this allows to move the support element 7 and the further support element 8 respectively in the movement direction D and in the further movement direction F so that they approach and/or move away symmetrically with each other and with respect to a central portion of said support frame 6, as shown in Figures 4 and 5.

In fact, in Figure 4, the support element 7 is positioned on the connecting member 9 in an end portion of the elongated body 13, and the support element 8 is positioned on the connecting member 9 in a further end portion of the elongated body 13 symmetrically with respect to the support element 7.

In Figure 5, on the other hand, the support element 7 and the support element 8 are positioned in a substantially central portion of the elongated body 13, the support element 7 having moved along the movement direction D and the element of support 8 having moved along the further movement direction F by the same amount and in a symmetrical way.

The distance between the two support elements 7 and 8 is progressively reduced if one looks first at Figure 4 and afterwards at Figure 5. Similarly, the distance between the two support elements 7 and 8 is progressively increased if one look first at Figure 5 and then at Figure 4.

The distance between each support element 7 and 8 and the central portion of the elongated body varies, that is, it decreases or increases, symmetrically. In other words, if a value of the distance between the support element 7 and the central portion of the elongated body 13 increases, the distance between the support element 8 and the central portion of the elongated body 13 will increase by the same value.

The connecting member 9 comprises a first connecting section T1 oriented parallel to the movement direction D, or to the further movement direction F. The connecting member 9 comprises a second connecting section T2 oriented parallel to the first connecting section T1. The first connection section T1 and the second connection section T2 are opposite, i.e. facing each other.

The support element 7 may be fixed in a removable way on the first connection section T1 and the further support element 8 may be fixed in a removable way on the second connection section T2, in the way explained below. The support element 7 may be fixed in a removable way on the second connection section T2 and the further support element 8 may be fixed in a removable way on the first connection section T1. In general, the support element 7 and the support element 8 are positioned on two different connecting sections, opposite or facing each other.

In the embodiments shown in the attached figures, the connecting member 9 comprises a connecting belt which is wound between a pair of pulleys 12a, 12b provided on the support frame 6, in particular on one face of the elongated body 13. For constructive reasons, in the attached figures the connecting member 9 and the pulleys 12a, 12b are provided on the upper surface of the elongated body 13, however an assembly on another face is not excluded, following appropriate design modifications. The connecting member may also comprise a chain, a rope, and other similar members closed in a loop.

The support element 7 may be fixed to the first connecting section T1 by means of fastening means. The fastening means may comprise a first fastening plate 25a fixed to the support element 7. Optionally, the fastening plate 25a may also be an integral part of the support element 7. In any case, the fastening body 25a is integral with the support element 7.

The fastening means may comprise a further fastening plate 25b. The two fixing plates 25a and 25b are mounted so that the connecting member 9, in particular the first connecting section T1, is interposed between the two fixing plates 25a and 25b. One of the two fixing plates, for example the plate 25a, rests slidingly on the elongated body 13.

At least one hole may be made on the fixing plate 25a and on the fixing plate 25b to allow the passage of screws or bolts so as to assemble the two plates together and fix them on the first connecting section T1.

Even the support element 8 may be fixed to the second section T2 by means of the same fastening means previously described and in the manner previously described, therefore the description will not be repeated again.

From what has been described up to now, it can be understood that thanks to the connection member 9 and the assembly of the support elements 7 and 8 on the connection member 9, it is sufficient to move only one of the support elements to obtain a displacement of the other. This significantly reduces the time required for adjusting the position of the support elements before an object is picked up from the pile of objects.

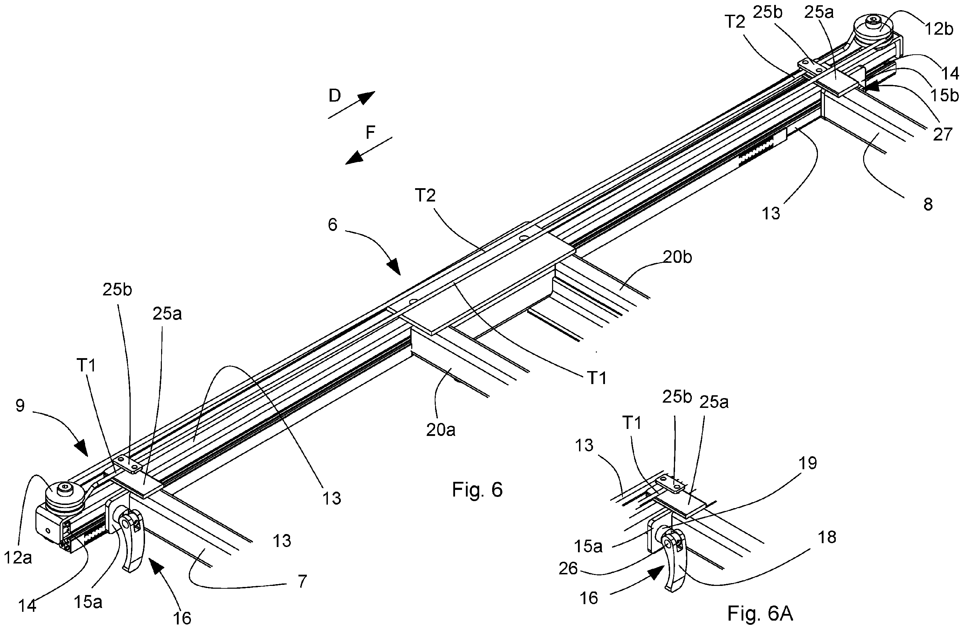

A sliding seat 14 may be obtained on the elongated body 13. The sliding seat 14 may extend parallel to the direction of movement D and may be formed on a side face, or surface, of the elongated body, as shown for example in Figure 6. The sliding seat may be a slot, or a groove made in the elongated body 13.

Each of the support elements 7, 8, in particular a sliding portion 15a of the support element 7 and a sliding portion 15b of the support element 8, may be connected slidingly to the sliding seat 14 of the elongated body 13, as explained below. The sliding portions 15a, 15b are substantially flat and have a surface, for example a flat surface, facing the sliding seat 14. The sliding portions 15a, 15b may be placed on the face of the elongated body 13 where the seat is obtained slide 14.

The sliding portions 15a, 15b may be an integral part of the support elements 7, 8, for example a protruding portion which extends from an end portion of the support element 7, 8 parallel to the movement direction D or to the further movement direction F.

Alternatively, the sliding portions 15a, 15b may include plates connected to an end portion of the support element 7, 8 which extend parallel to the movement direction D or to the further movement direction F.

At least one sliding portion, for example the sliding portion 15a, is connected to the sliding seat 14 by means of a sliding and/or locking unit 16. The sliding portion 15a is in fact provided with a sliding and/or locking unit 16 arranged to be at least partially housed and to slide in the sliding seat 14. The sliding and/or locking unit 16 is switchable between a first configuration in which it allows a displacement of the at least one sliding portion 15a with respect to to the sliding seat 14, and a second configuration in which it blocks a displacement of the sliding portion 15a with respect to the sliding seat 14, as explained below.

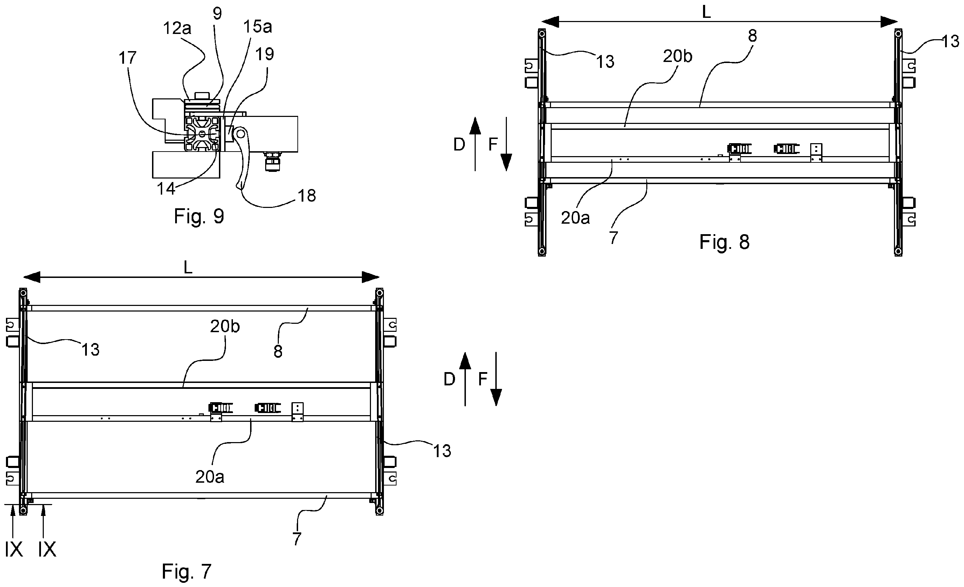

The sliding and/or locking unit 16 may comprise a cam lever 16 as shown in detail in Figures 6A and 9. The cam lever is of a commercially known type and may comprise a sliding element 17 shaped to be housed and sliding in the sliding seat 14, for example a captive screw, a handle 18 shaped and having a cam-type profile, a pin 26 acting as a fulcrum to allow the rotation of the handle 18, a pressure washer 19 made in plastic. Possibly the cam lever may also include a steel washer, in this case the pressure washer 19 may be positioned between the handle 18 and the steel washer.

The cam lever 16 may be mounted on the sliding portion 15a; for example, a through hole sized to allow the sliding element 17 to pass through it may be made on the sliding portion 15a; the through hole is also oriented so as to allow the sliding element 17 to be housed in the sliding seat 14. An additional through hole may be obtained on the pin 26, sized to allow the sliding element 17 to pass through it. The additional through hole may be threaded. In this way it is possible to constrain the sliding element 17, for example the screw, to the pin 26 after having inserted it in the sliding seat 14 and having adjusted it in position. The handle 18 is rotatably connected to the pin 26.

The cam lever 16 may be mounted so that the pressure washer 19 rests on the sliding portion 15a. If a steel washer is provided, the latter is positioned between the sliding portion 15a and the pressure washer 19.

In the assembled configuration, the handle 18, in particular the cam-shaped portion, is in contact with the pressure washer 19.

A rotation of the handle 18 around the pin 26 in a predetermined direction of rotation increases a clamping force applied to the pressure washer, which in turn transmits this clamping force to the sliding portion 15a, increasing the clamping force friction present between the sliding portion 15a and the face of the elongated body 13 (on which the sliding portion 15a rests). This prevents the sliding portion 15a from moving along the moving direction D.

A rotation of the handle 18 around the pin 26 in an opposite direction of rotation reduces the clamping force and the consequent frictional force, allowing one of the sliding element 17 to be moved in the seat 14 along the movement direction D or in the further movement direction F, and a consequent displacement of the sliding portion 15a.

The other sliding portion 15b may also be provided with a sliding unit 27, arranged to house at least in part and to slide in the seat 14 of the elongated element 13 and to allow the sliding portion 15b and therefore the support element 8 to move in the further movement direction F or in the movement direction D, as appropriate.

The sliding unit 27 may be at least in part similar to the sliding and/or locking unit 16. In other words, the sliding unit 27 may comprise a sliding element shaped to be housed and slide into the sliding seat 14. The sliding element may be connected to the sliding portion 15b in the manner described above, for example it passes through a hole made in the sliding portion 15b. The sliding unit 27 makes it possible to move the support element 8 following a movement imparted to the support element 7.

Alternatively, the support element 8 may also be provided with a cam lever like the one provided on the sliding portion 15a. In this case, however, the handle is rotated, or in any case positioned so as not to exert a clamping force on the sliding portion 15b and so as to allow the movement of the support element 8.

Thanks to what has been described, it is possible to move both support elements, imparting a movement to only one of the two; this makes, at the same time, rapid and precise adjustment in position of the support elements along the elongated body 13 based on the length of the object to be picked up.

The pick-up device 5 is provided with holding means 10, 10a, 10b, 10c, ... suitable for holding the object to be picked up from said pile of objects O. The holding means 10, 10a, 10b, 10c, ... is mounted in a row on each support element 7, 8 along the main direction L. The holding means comprising a plurality of suckers.

The suction cups are mounted on each support element so that they face the surface of the object to be picked up. Thanks to the aforementioned position adjustment of the support elements 7, 8 and the movement of the pick-up device 5 approaching the objects, the suction cups can adhere to the surface of the object by exploiting a state of depression generated in an internal chamber of each suction cup. It may be of various shapes, the most common being the circular one. The edge of each cup is shaped in such a way as to obtain a good seal against the passage of air.

The support frame 6 may comprise at least one further support element, for example two further support elements 20a, 20b. The further support elements 20a, 20b are structurally similar to the support elements 7, 8.

The further support elements 20a, 20b extend parallel to the main direction L and are fixed to an elongated body 13. The further support elements 20a, 20b are arranged parallel to each other. The further supporting elements 20a, 20b are fixed on the central portion of the elongated body 13. In particular, the further supporting elements 20a, 20b are fixed transversely between the two elongated bodies 13.

Obviously, if these further support elements 20a, 20b are present, the support elements 7 and 8 approach and move away from each other and with respect to said support elements 20a, 20b.

On the further support element, in particular on both further support elements 20a, 20b are mounted in a row along the main direction L of the further holding means 21, 21a, 21b, 21c, ... suitable for retaining the object to be picked up from said pile of objects O. These further holding means 21, 21a, 21b, 21c, ... contribute, together with the holding means 10, 10a, 10b, 10c, ... previously described, to increase a picking force to pick up the object from the stack of objects O.

In the embodiment described up to now, the displacement of the support elements 7 and 8 may be performed manually.

On the basis of what has already been described, the pick-up device is housed in a chamber provided in the loading area 3 and is positioned so that a support element, for example the support element 7, is in the vicinity of the opening of the aforementioned room. Thanks to what has been described so far, the operator, remaining in the vicinity of the chamber entrance, can switch the sliding and/or locking unit 16 provided on the support element 7 from the first configuration to the second configuration, imparting a displacement to the sole support element 7 (thus also displacing the support element 8), and switch again to switch the sliding and/or locking unit 16 from the second configuration to the first configuration.

Thanks to what has been described so far, the operator is exempted from entering the chamber in the loading area 3 and staying there to adjust both support elements, except of course in the case of maintenance and repair. The risks to which the operator is subjected are significantly reduced and the adjustment operation in position is quick and accurate. In addition, the operation of moving and adjusting the movable support elements in position is significantly accelerated.

Alternatively, in an embodiment not shown, the pick-up device 5 may be connected to motor means which may be actuated to allow a displacement of the support elements 7, 8 in the movement direction D or in the further movement direction F, and of locking means operable to stop this movement and prevent unwanted movement of the support elements 7, 8. Said motor means and locking means are connected to a control unit configured to control an operation of moving the support elements 7, 8 in the movement direction D or in the further movement direction F.

In the forming apparatus just described, it is possible to implement a method for picking up an object in the form of a slab or film.

This method comprises the steps of:
- positioning at least one object in the loading area 3, in particular placing one object on top of the other to form a pile of objects;
- moving a pick-up device 5 towards and/or away from at least one object;
- slidingly connecting support elements 7, 8 to a support frame 6 of the pick-up device 5, on each support element 7, 8 being provided with holding means 10, 10a, 10b, 10c, ..., (previously described) arranged for holding the item to be withdrawn;
- measuring a dimension of the object to be taken along a movement direction D;
- providing the pick-up device 5 with a connecting member 9 arranged to connect said support elements 7, 8 to each other, and
- positioning the support elements 7, 8 on the connecting member 9 in such a way that a displacement of a support element 7 in the movement direction D corresponds to a displacement of at least one further support element 8 in a further movement direction F substantially parallel and opposite to the movement direction D to vary a distance between the support elements 7, 8 on the basis of the size of the object to be picked up.

These steps of the method described above, and others still, may be carried out by means of the previously described means, to which reference is made. From the description of these means it is also possible to deduce the way in which they are used, for example how to position the support elements on the connecting member, how the support elements are moved, how to block the movement of the support elements, and so on.

## Claims

1. Thermoforming apparatus (1), arranged to perform thermoforming operations on objects (O) in the form of a slab or film, comprising at least one loading area (3) in which said objects are positioned one on top of the other so as to form a pile of objects (O), said thermoforming apparatus (1) in said loading area (3) being provided with a pick-up device (5) arranged to pick up one object at a time from said pile of objects (O), said pick-up device (5) comprising a support frame (6) movable towards and/or away from said pile of objects (O), and support elements (7, 8) that are slidably connected to said support frame (6), **characterized in that** said pick-up device (5) is provided with a connecting member (9) arranged to connect said support elements (7, 8) one another, said support elements (7, 8) being positioned on said connecting member (9) so that a displacement of one support element (7) in a movement direction (D) corresponds to a displacement of at least one further support element (8) in a further movement direction (F) substantially parallel and opposite to said movement direction (D) so as to vary a distance between said support elements (7, 8) on the basis of a size of the object to be picked up, said size being measured along said movement direction (D).

2. Thermoforming apparatus (1) according to claim 1, wherein said support element (7) and said further support element (8) are positioned on said connecting member (9) so that a displacement value of said support element (7) in said movement direction (D) corresponds to a same displacement value of said further support element (8) in said further movement direction (F).

3. Thermoforming apparatus (1) according to claim 1 or 2, wherein said support element (7) and said further support element (8) are positioned on said connecting member (9) so that they symmetrically get close or move away one another, and so that they symmetrically get close or move away from a central portion of said support frame (6).

4. Thermoforming apparatus (1) according to any preceding claim, wherein said support elements (7, 8) are positioned on said connecting member (9) so that a displacement of a support element (7) in said further movement direction (F) corresponds to a displacement of said at least one further support element (8) in said movement direction (D).

5. Thermoforming apparatus (1) according to any preceding claim, wherein said connecting member (9) is removably mounted on said support frame (6), said connecting member (9) comprising a first connecting part (T1) oriented parallel to said movement direction (D), and a second connecting part (T2) oriented parallel to said first connecting part (T1), said support element (7) being removably fixed on said first connecting part (T1) and said further support element (8) being removably fixed on said second connecting part (T2).

6. Thermoforming apparatus (1) according to any preceding claim, wherein said connecting member (9) is closed in a ring shape.

7. Thermoforming apparatus (1) according to claim 6, wherein said connecting member (9) comprises a connecting belt which is wound between a pair of pulleys (12a, 12b) provided on said support frame (6) and placed at a distance in said movement direction (D).

8. Thermoforming apparatus (1) according to any preceding claim, wherein said support frame (6) comprises at least one elongated body (13) extending parallel to said movement direction (D), on said at least one elongated body (13) a sliding seat (14) being obtained.

9. Thermoforming apparatus (1) according to claim 8, wherein each of said support elements (7, 8) extends in a main direction (L) that is coplanar and transverse to said movement direction (D), a sliding portion (15a, 15b) of each of said support elements (7, 8) being slidably connected to said sliding seat (14) of said elongated body (13).

10. Thermoforming apparatus (1) according to claim 9, wherein at least one sliding portion (15a) is provided with a sliding and/or locking unit (16) arranged to be at least partially housed and slide in said sliding seat (14); said sliding and/or locking unit (16) being switchable between a first configuration in which said sliding and/or locking unit (16) allows a movement of said at least a sliding portion (15a) along said sliding seat (14), and a second configuration in which it blocks a movement of said at least one sliding portion (15a) along said sliding seat (14).

11. Thermoforming apparatus (1) according to claim 10, wherein said sliding and/or locking unit (16) comprises a cam lever.

12. Thermoforming apparatus (1) according to any preceding claim, wherein said pick-up device (5) comprises holding means (10, 10a, 10b, 10c, ...) suitable for holding the object to be picked up from said pile of objects (O).

13. Thermoforming apparatus (1) according to claim 12 as appended to claim 9, wherein said holding means (10, 10a, 10b, 10c, ...) is mounted in a row on each support element (7, 8) along said main direction (L), said holding means (10, 10a, 10b, 10c, ...) comprising a plurality of suckers.

14. Thermoforming apparatus (1) according to any one of claims 9 to 13, wherein said support frame (6) comprises at least one further support element (20a, 20b) extending parallel to said main direction (L) and fixed to said at least one elongated body (13), on said at least one further support element (20a, 20b) being mounted further holding means (21, 21a, 21b, 21c, ...) in a row along said main direction (L), said further holding means (21, 21a, 21b, 21c, ...) being adapted to hold the object to be picked up from said pile of objects (O).

15. Method for picking up an object in the form of a slab or film in a thermoforming apparatus (1) according to any preceding claim, comprising the steps of:
- positioning at least one object in a loading area (3) of said thermoforming apparatus (1);
- moving a pick-up device (5) towards and/or away from said at least one object;
- slidingly connecting support elements (7, 8) to a support frame (6) of said pick-up device (5), on said support elements (7, 8) being provided holding means (10, 10a, 10b, 10c, ...) suitable for holding the object to be picked up;
- measuring a size of said object to be picked up along a movement direction (D);
- providing said pick-up device (5) with a connecting member (9) arranged to connect said support elements (7, 8) one another;
- positioning said support elements (7, 8) on said connecting member (9) so that a movement of a support element (7) in said movement direction (D) corresponds to a movement of at least one further element support (8) in a further movement direction (F) substantially parallel and opposite to said movement direction (D) so as to vary a distance between said support elements (7, 8) on the basis of said size of the object to be picked up.

## Patentansprüche

1. Thermoformvorrichtung (1), die so angeordnet ist, dass sie Thermoformungsvorgänge an Gegenständen (O) in Form einer Platte oder eines Films durchführt, mit mindestens einem Ladebereich (3), in dem die Gegenstände übereinander angeordnet werden, um einen Stapel von Gegenständen (O) zu bilden, wobei die Thermoformvorrichtung (1) in dem Ladebereich (3) mit einer Aufnahmevorrichtung (5) versehen ist, die so angeordnet ist, dass sie jeweils einen Gegenstand von dem Stapel von Gegenständen (O) aufnimmt, wobei die Aufnahmevorrichtung (5) einen Stützrahmen (6), der zu dem Stapel von Gegenständen (O) hin und/oder von ihm weg bewegbar ist, und Stützelemente (7, 8) umfasst, die verschiebbar mit dem Stützrahmen (6) verbunden sind, **dadurch gekennzeichnet, dass** die Aufnahmevorrichtung (5) mit einem Verbindungselement (9) versehen ist, das angeordnet ist, um die Stützelemente (7, 8) miteinander zu verbinden, wobei die Stützelemente (7, 8) auf dem Verbindungselement (9) so positioniert sind, dass eine Verschiebung eines Stützelements (7) in einer Bewegungsrichtung (D) einer Verschiebung von mindestens einem weiteren Stützelement (8) in einer weiteren Bewegungsrichtung (F) entspricht, die im Wesentlichen parallel und entgegengesetzt zu der Bewegungsrichtung (D) ist, um einen Abstand zwischen den Stützelementen (7, 8) auf der Grundlage einer Größe des aufzunehmenden Gegenstand zu variieren, wobei die Größe entlang der Bewegungsrichtung (D) gemessen wird.

2. Thermoformvorrichtung (1) nach Anspruch 1, wobei das Stützelement (7) und das weitere Stützelement (8) so auf dem Verbindungselement (9) positioniert sind, dass ein Verschiebungswert des Stützelements (7) in der Bewegungsrichtung (D) einem gleichen Verschiebungswert des weiteren Stützelements (8) in der weiteren Bewegungsrichtung (F) entspricht.

3. Thermoformvorrichtung (1) nach Anspruch 1 oder 2, wobei das Stützelement (7) und das weitere Stützelement (8) so auf dem Verbindungselement (9) positioniert sind, dass sie sich symmetrisch einander annähern oder voneinander wegbewegen, und so, dass sie sich symmetrisch einem zentralen Abschnitt des Stützrahmens (6) annähern oder von diesem wegbewegen.

4. Thermoformvorrichtung (1) nach einem der vorhergehenden Ansprüche, wobei die Stützelemente (7, 8) auf dem Verbindungselement (9) so positioniert sind, dass eine Verschiebung eines Stützelements (7) in der weiteren Bewegungsrichtung (F) einer Verschiebung des mindestens einen weiteren Stützelements (8) in der Bewegungsrichtung (D) entspricht.

5. Thermoformvorrichtung (1) nach einem der vorhergehenden Ansprüche, wobei das Verbindungselement (9) abnehmbar an dem Stützrahmen (6) angebracht ist, wobei das Verbindungselement (9) einen ersten Verbindungsteil (T1), der parallel zu der Bewegungsrichtung (D) ausgerichtet ist, und einen zweiten Verbindungsteil (T2), der parallel zu dem ersten Verbindungsteil (T1) ausgerichtet ist, umfasst, wobei das Stützelement (7) abnehmbar an dem ersten Verbindungsteil (T1) befestigt und das weitere Stützelement (8) abnehmbar an dem zweiten Verbindungsteil (T2) befestigt ist.

6. Thermoformvorrichtung (1) nach einem der vorhergehenden Ansprüche, wobei das Verbindungselement (9) ringförmig geschlossen ist.

7. Thermoformvorrichtung (1) nach Anspruch 6, wobei das Verbindungselement (9) einen Verbindungsriemen umfasst, der zwischen einem Paar von Riemenscheiben (12a, 12b) aufgewickelt ist, die an dem Stützrahmen (6) vorgesehen und in einem Abstand in der Bewegungsrichtung (D) angeordnet sind.

8. Thermoformvorrichtung (1) nach einem der vorhergehenden Ansprüche, wobei der Stützrahmen (6) mindestens einen länglichen Körper (13) aufweist, der sich parallel zur Bewegungsrichtung (D) erstreckt, wobei auf dem mindestens einen langgestreckten Körper (13) ein Gleitsitz (14) ausgebildet ist.

9. Thermoformvorrichtung (1) nach Anspruch 8, wobei sich jedes der Stützelemente (7, 8) in einer Hauptrichtung (L) erstreckt, die koplanar und quer zu der Bewegungsrichtung (D) ist, wobei ein Gleitabschnitt (15a, 15b) jedes der Stützelemente (7, 8) gleitend mit dem Gleitsitz (14) des länglichen Körpers (13) verbunden ist.

10. Thermoformvorrichtung (1) nach Anspruch 9, wobei mindestens ein Gleitabschnitt (15a) mit einer Gleit- und/oder Verriegelungseinheit (16) versehen ist, die so angeordnet ist, dass sie mindestens teilweise in dem Gleitsitz (14) untergebracht ist und gleitet; wobei die Gleit- und/oder Verriegelungseinheit (16) zwischen einer ersten Konfiguration, in der die Gleit- und/oder Verriegelungseinheit (16) eine Bewegung des mindestens einen Gleitabschnitts (15a) entlang des Gleitsitzes (14) zulässt, und einer zweiten Konfiguration, in der sie eine Bewegung des mindestens einen Gleitabschnitts (15a) entlang des Gleitsitzes (14) blockiert, umschaltbar ist.

11. Thermoformvorrichtung (1) nach Anspruch 10, wobei die Gleit- und/oder Verriegelungseinheit (16) einen Nockenhebel umfasst.

12. Thermoformvorrichtung (1) nach einem der vorhergehenden Ansprüche, wobei die Aufnahmevorrichtung (5) Haltemittel (10, 10a, 10b, 10c, ...) umfasst, die geeignet sind, den aufzunehmenden Gegenstand von dem Stapel von Gegenständen (O) zu halten.

13. Thermoformvorrichtung (1) nach Anspruch 12 in Verbindung mit Anspruch 9, wobei die Haltemittel (10, 10a, 10b, 10c, ...) in einer Reihe an jedem Stützelement (7, 8) entlang der Hauptrichtung (L) angebracht sind, wobei die Haltemittel (10, 10a, 10b, 10c, ...) eine Vielzahl von Saugnäpfen umfassen.

14. Thermoformvorrichtung (1) nach einem der Ansprüche 9 bis 13, wobei der Stützrahmen (6) mindestens ein weiteres Stützelement (20a, 20b) umfasst, das sich parallel zur Hauptrichtung (L) erstreckt und an dem mindestens einen länglichen Körper (13) befestigt ist, wobei an dem mindestens einen weiteren Stützelement (20a, 20b) weitere Haltemittel (21, 21a, 21b, 21c, ....) in einer Reihe entlang der Hauptrichtung (L) angebracht sind, wobei die weiteren Haltemittel (21, 21a, 21b, 21c, ...) dazu geeignet sind, den Gegenstand zu halten, der von dem Stapel von Gegenständen (O) aufgenommen werden soll.

15. Verfahren zum Aufnehmen eines Gegenstandes in Form einer Platte oder eines Films in einer Thermoformvorrichtung (1) nach einem der vorhergehenden Ansprüche, umfassend die Schritte:
- Positionieren mindestens eines Gegenstandes in einem Ladebereich (3) der Thermoformvorrichtung (1);
- Bewegen einer Aufnahmevorrichtung (5) zu dem mindestens einen Gegenstand hin und/oder von diesem weg;
- gleitendes Verbinden von Stützelementen (7, 8) mit einem Stützrahmen (6) der Aufnahmevorrichtung (5), wobei an den Stützelementen (7, 8) Haltemittel (10, 10a, 10b, 10c, ...) vorgesehen sind, die zum Halten des aufzunehmenden Gegenstandes geeignet sind;
- Messen einer Größe des aufzunehmenden Gegenstandes entlang einer Bewegungsrichtung (D);
- Versehen der Aufnahmevorrichtung (5) mit einem Verbindungselement (9), das so angeordnet ist, dass es die Stützelemente (7, 8) miteinander verbindet;
- Positionieren der Stützelemente (7, 8) auf dem Verbindungselement (9), so dass eine Bewegung eines Stützelements (7) in der Bewegungsrichtung (D) einer Bewegung mindestens eines weiteren Stützelements (8) in einer weiteren Bewegungsrichtung (F) entspricht, die im Wesentlichen parallel und entgegengesetzt zu der Bewegungsrichtung (D) verläuft, um einen Abstand zwischen den Stützelementen (7, 8) auf der Grundlage der Größe des aufzunehmenden Gegenstandes zu variieren.

## Revendications

1. Appareil de thermoformage (1), conçu pour effectuer des opérations de thermoformage sur des objets (O) en forme de plaque ou de film, comprenant au moins une zone de chargement (3) dans laquelle lesdits objets sont positionnés l'un au-dessus de l'autre de manière à former une pile d'objets (O), ledit appareil de thermoformage (1) dans ladite zone de chargement (3) étant pourvu d'un dispositif de prélèvement (5) conçu pour prélever un objet à la fois à partir de ladite pile d'objets (O), ledit dispositif de prélèvement (5) comprenant un cadre de support (6) mobile vers et/ou à l'opposé de ladite pile d'objets (O), et des éléments de support (7, 8) qui sont reliés de manière coulissante audit cadre de support (6), **caractérisé en ce que** ledit dispositif de prélèvement (5) est pourvu d'un élément de liaison (9) conçu pour relier lesdits éléments de support (7, 8) l'un à l'autre, lesdits éléments de support (7, 8) étant positionnés sur ledit élément de liaison (9) de manière à ce qu'un déplacement d'un premier élément de support (7) dans une direction de mouvement (D) corresponde à un déplacement d'au moins un autre élément de support (8) dans une autre direction de mouvement (F) sensiblement parallèle et opposée à ladite direction de mouvement (D) de manière à modifier une distance entre lesdits éléments de support (7, 8) sur la base d'une taille de l'objet à prélever, ladite taille étant mesurée le long de ladite direction de mouvement (D).

2. Appareil de thermoformage (1) selon la revendication 1, dans lequel ledit élément de support (7) et ledit autre élément de support (8) sont positionnés sur ledit élément de liaison (9) de manière à ce qu'une valeur de déplacement dudit élément de support (7) dans ladite direction de mouvement (D) corresponde à une même valeur de déplacement dudit autre élément de support (8) dans ladite autre direction de mouvement (F).

3. Appareil de thermoformage (1) selon la revendication 1 ou 2, dans lequel ledit élément de support (7) et ledit autre élément de support (8) sont positionnés sur ledit élément de liaison (9) de manière à ce qu'ils se rapprochent ou s'éloignent symétriquement l'un de l'autre, et de manière à ce qu'ils se rapprochent ou s'éloignent symétriquement d'une partie centrale dudit cadre de support (6).

4. Appareil de thermoformage (1) selon une revendication précédente, dans lequel lesdits éléments de support (7, 8) sont positionnés sur ledit élément de liaison (9) de manière à ce qu'un déplacement d'un élément de support (7) dans ladite autre direction de mouvement (F) corresponde à un déplacement dudit au moins un autre élément de support (8) dans ladite direction de mouvement (D).

5. Appareil de thermoformage (1) selon une revendication précédente, dans lequel ledit élément de liaison (9) est monté de manière amovible sur ledit cadre de support (6), ledit élément de liaison (9) comprenant une première partie de liaison (T1) orientée parallèlement à ladite direction de mouvement (D), et une seconde partie de liaison (T2) orientée parallèlement à ladite première partie de liaison (T1), ledit élément de support (7) étant fixé de manière amovible sur ladite première partie de liaison (T1) et ledit autre élément de support (8) étant fixé de manière amovible sur ladite seconde partie de liaison (T2).

6. Appareil de thermoformage (1) selon une revendication précédente, dans lequel ledit élément de liaison (9) est fermé en forme d'anneau.

7. Appareil de thermoformage (1) selon la revendication 6, dans lequel ledit élément de liaison (9) comprend une courroie de liaison qui est enroulée entre une paire de poulies (12a, 12b) disposées sur ledit cadre de support (6) et placées à distance dans ladite direction de mouvement (D).

8. Appareil de thermoformage (1) selon une revendication précédente, dans lequel ledit cadre de support (6) comprend au mois un corps allongé (13) s'étendant parallèlement à ladite direction de mouvement (D), un siège coulissant (14) étant obtenu sur ledit au moins un corps allongé (13).

9. Appareil de thermoformage (1) selon la revendication 8, dans lequel chacun desdits éléments de support (7, 8) s'étend dans une direction principale (L) qui est coplanaire et transversale à ladite direction de mouvement (D), une partie coulissante (15a, 15b) de chacun desdits éléments de support (7, 8) étant reliée de manière coulissante audit siège coulissant (14) dudit corps allongé (13).

10. Appareil de thermoformage (1) selon la revendication 9, dans lequel au moins une partie coulissante (15a) est pourvue d'une unité coulissante et/ou de verrouillage (16) conçue pour être au moins partiellement logée et pour coulisser dans ledit siège coulissant (14) ; ladite unité coulissante et/ou de verrouillage (16) étant commutable entre une première configuration dans laquelle ladite unité coulissante et/ou de verrouillage (16) permet un mouvement de ladite au moins une partie coulissante (15a) le long dudit siège coulissant (14), et une seconde configuration dans laquelle elle bloque un mouvement de ladite au moins une partie coulissante (15a) le long dudit siège coulissant (14).

11. Appareil de thermoformage (1) selon la revendication 10, dans lequel ladite unité coulissante et/ou de verrouillage (16) comprend un levier à came.

12. Appareil de thermoformage (1) selon une revendication précédente, dans lequel ledit dispositif de prélèvement (5) comprend des moyens de maintien (10, 10a, 10b, 10c, ...) appropriés pour maintenir l'objet à prélever à partir de ladite pile d'objets (O).

13. Appareil de thermoformage (1) selon la revendication 12 en ce qu'elle dépend de la revendication 9, dans lequel lesdits moyens de maintien (10, 10a, 10b, 10c, ...) sont montés en une rangée sur chaque élément de support (7, 8) le long de ladite direction principale (L), lesdits éléments de maintien (10, 10a, 10b, 10c, ...) comprenant une pluralité de ventouses.

14. Appareil de thermoformage (1) selon l'une des revendications 9 à 13, dans lequel ledit cadre de support (6) comprend au moins un autre élément de support (20a, 20b) s'étendant parallèlement à ladite direction principale (L) et fixé audit au moins un corps allongé (13), sur ledit au moins un autre élément de support (20a, 20b) étant montés des autres moyens de maintien (21, 21a, 21b, 21c, ...) en une rangée le long de ladite direction principale (L), lesdits autres moyens de maintien (21, 21a, 21b, 21c, ...) étant adaptés pour maintenir ledit objet à prélever à partir de ladite pile d'objets (O).

15. Procédé de prélèvement d'un objet en forme de plaque ou de film dans un appareil de thermoformage (1) selon une revendication précédente, comprenant les étapes consistant à :
- positionner au moins un objet dans une zone de chargement (3) dudit appareil de thermoformage (1) ;
- déplacer un dispositif de prélèvement (5) vers et/ou à l'opposé dudit au moins un objet ;
- relier de manière coulissante des éléments de support (7, 8) à un cadre de support (6) dudit dispositif de prélèvement (5), sur lesdits éléments de support (7, 8) étant disposés des moyens de maintien (10, 10a, 10b, 10c, ...) appropriés pour maintenir l'objet à prélever ;
- mesurer une taille dudit objet à prélever le long d'une direction de mouvement (D) ;
- doter ledit dispositif de prélèvement (5) d'un élément de liaison (9) conçu pour relier lesdits éléments de support (7, 8) l'un à l'autre ;
- positionner lesdits éléments de support (7, 8) sur ledit élément de liaison (9) de manière à ce qu'un mouvement d'un élément de support (7) dans ladite direction de mouvement (D) corresponde à un mouvement d'au moins un autre élément de support (8) dans une autre direction de mouvement (F) sensiblement parallèle et opposée à ladite direction de mouvement (D) de manière à modifier une distance entre lesdits éléments de support (7, 8) sur la base de ladite taille de l'objet à prélever.
